(19) Europäisches Patentamt

European Patent Office

Office européen des brevets

(11) Publication number: **0 264 905 B1**

(12) **EUROPEAN PATENT SPECIFICATION**

(45) Date of publication of patent specification: **02.09.92**  (51) Int. Cl.5: **B01F 3/04**

(21) Application number: **87115334.2**

(22) Date of filing: **20.10.87**

(54) **Process and apparatus for mixing of gases and liquids.**

(30) Priority: **21.10.86 US 921198**

(43) Date of publication of application:
**27.04.88 Bulletin 88/17**

(45) Publication of the grant of the patent:
**02.09.92 Bulletin 92/36**

(84) Designated Contracting States:
**AT BE CH DE ES FR GB GR IT LI LU NL SE**

(56) References cited:
**EP-A- 0 027 911**
**EP-A- 0 099 078**
**DE-B- 2 556 522**
**GB-A- 1 282 389**
**GB-A- 1 551 005**

(73) Proprietor: **UNION CARBIDE CORPORATION**
**39 Old Ridgebury Road**
**Danbury Connecticut 06817(US)**

(72) Inventor: **Litz, Lawrence Marvin**
**16 Briarwood Lane**
**Pleasantville 10570 N.Y.(US)**
Inventor: **Weise, Mark Kurt**
**66 Brookview Drive**
**North Halodon 07508 New Jersey(US)**
Inventor: **Adis, Mitchell**
**39 Lawrence Drive**
**North White Plains 10603 N.Y.(US)**

(74) Representative: **Schwan, Gerhard, Dipl.-Ing.**
**Elfenstrasse 32**
**W-8000 München 83(DE)**

# Description

## Background of the Invention

### Field of the Invention

The invention relates to the mixing of gases and liquids. More particularly, it relates to the formation and recirculation of gas bubble-liquid mixtures.

### Description of the Prior Art

A wide variety of techniques and systems are known in the art for achieving the mixing and/or reacting of gases. Thus, surface aerators, jets and impellers within stirred tanks have been employed for such mixing. When the residence time required for a desired mixing or reaction operation is longer than a few minutes, either on a batch or continuous basis, stirred tank reactors (STR) are commonly employed. As disclosed in "A Mixed Gas - Liquid Stirred Tank Reactor," L.M. Litz, CEP, November, 1985, pp. 36-39, gas is normally fed to a sparger at the bottom of a conventional STR, and a flat-bladed Rushton turbine or other such mixer system is used to shear the gas into small bubbles for dispersion in the liquid phase. Axial flow impellers are commonly employed to facilitate gas dissolution. Further dissolution is said to occur as the gas bubbles rise up through the liquid, but undissolved gas that reaches the gas-liquid interface in the upper part of the STR is normally lost.

The Litz publication refers to a new design STR, called an Advanced Gas Reactor (AGR), that enables gas dissolution and chemical reaction rates to be increased, while gas and power consumption is being reduced. In this AGR system, a down-pumping impeller is employed within a draft tube, with a baffle arrangement at the inlet thereof causing the liquid flowing into the top of the draft tube to form vortices. These vortices cause feed gas from the gas phase above the liquid to pass down through the draft tube. Additional information pertaining to the AGR system is contained in the publication, and in the Litz patent, U.S.-A-4,454,077, dated June 12,1984.

It is well known to use such mixing systems for the reaction of oxygen containing gases, such as air, with organic liquids to form various oxygenated products. Typical of such processes are the oxidation of cumene to form cumene hydroperoxide useful as an intermediate in the production of phenol, the oxidation of propionaldehyde to propionic acid, the oxidation of cyclohexane to adipic acid, and the like. Similarly, such mixing systems can be used for the reaction of hydrogen with various organic chemicals or other materials, as in the hydrogenation of edible and non-edible fats and oils, or of antioxidants, medicinals, aluminum alkyls, and the like.

When such gas-liquid mixing operations are carried out in relatively simple tanks or towers, the feed gas is typically bubbled in near the bottom of the tank. Mechanical agitation means may be employed to improve gas-liquid mass transfer, to improve heat exchange, or to maintain solid catalysts in suspension in the gas-liquid reaction mixture. In some cases, a simple bubble column is employed, with the injected gas rising up through the body of liquid in the tank. In any event, the oxygen, hydrogen, chlorine or other reactive gas reacts directly when in bubble form, or dissolves in the liquid and then reacts, or experiences both forms of activity. Unreacted gas may be recirculated within the liquid phase, to some extent, by the flow of the liquid as influenced by impellers, as in a conventional STR configuration, or additionally by the liquid downflow in the AGR system in which a draft tube is employed.

Gas-liquid mixing operations must include provisions for changes in the volume of liquid resulting from the dispersion of gases therein. Accordingly, a free liquid surface with an overhead gas phase is typically provided for in mixing operations of the type described herein.

A serious limitation as to the amount of oxygen that may be fed into any of the reactor systems described above resides in the fact that many organic compounds can burn, or even explode, when their vapor is admixed with an oxygen-rich gas. It should be noted that little, if any, such safety problem exists when small gas bubbles of high oxygen content are dispersed within the liquid phase of such a flammable material. This is because the liquid phase provides a large heat sink capable of absorbing any rapid energy release that would occur if the gas bubbles were to ignite in the liquid at typical gas bubble concentrations of 5-20 volume %. There is, in addition, a concentration of oxygen in the vapor-gas phase below which combustion will not be sustained, i.e. a lower flammability limit. With respect to many organic materials, this lower flammability limit is in the range of about 8 to 12 volume percent. For safety reasons, reactors typically are fed only as much oxygen as will assure that the unreacted gas does not cause the oxygen in the gas phase to exceed the oxygen concentration of said lower flammability limit. A negative consequence of this limitation is that the oxygen content of the gas bubbles typically falls off considerably from a point of injection of the gas near the bottom of the reactor and the discharge of bubbles at the gas-liquid interface near the top of the tank. As a result, the reaction rate and the gas dissolution rate, which typically are dependent upon the oxygen concentration in the gas bubbles, can decline substantially from the bottom to the top of a conventional reactor. It is well known, however, that, in some cases, it would be desirable to carry out a reaction at fairly high gas bubble oxygen concentrations, even up to pure oxygen feed gas, so as to increase the reaction rate or to improve reaction selectivity to the desired reaction rather than to undesired side reactions.

In the AGR system, as pointed out in the Litz publication, the gas that escapes into the gas phase is recirculated back into the liquid via the vortex ingestion path. While the AGR system can thus be employed to overcome the problems associated with loss of gas into of oxygen in the vapor-gas phase, those skilled in the art will appreciate that the gas introduction rate of the AGR system is a function of the vortex characteristics of the system. While the AGR system provides highly desirable process and apparatus for mixing a gas and a liquid, it will thus be seen to require particular design expertise, especially with respect to the application thereof to operations in which a potentially explosive gas mixture could be created in the vapor-gas phase upon the carrying out of particular gas-liquid reactions at desirably high reaction rates. This is particularly so in light of the sensitivity of the AGR system to liquid level changes and of the fact that the vapor phase concentration of oxygen is in equilibrium with the concentration thereof in the liquid phase.

Additionally, GB-A-1 282 389 discloses a similar gas-liquid contacting apparatus, whereby its characterizing features form the preamble of claim 26.

For the reasons above, there is a desire in the art for further gas-liquid mixing development, particularly with respect to reactions subject to the potential of gas phase burning or explosions at desirable reaction rates using the reactor systems and techniques known in the art. Such further development would not replace the AGR approach, but would provide an alternative thereto, one not dependent upon the vortex characteristics, liquid level sensitivities and other pertinent factors relating to the AGR approach. While the concerns with respect to potentially explosive vapor-gas phase mixtures in oxygen applications do not generally pertain in hydrogen, chlorine and other gas applications, it is nevertheless desirable in the art to have an alternative approach available also for use in particular non-oxygen gas-liquid applications. Thus, in some instances, it may be desirable to carry out particular reaction in manner not sensitive to variations in the liquid level existing within the reactor tank. It is also desirable in some instances to assure retention of the feed gas within the reactor volume by virtue of the system design, apart from the characteristics of a vortex as in AGR processing.

It is an object of the invention, therefore, to provide a process and apparatus for the mixing of a gas and liquid without appreciable loss of gas into the overhead gas phase.

It is another object of the invention to provide a process and apparatus for the enhanced mixing of gas and liquid by the use of a draft tube configuration without undue sensitivity to changes in the level of liquid during the processing operation.

It is a further object of the invention to provide a process and apparatus for the reaction of oxygen with organic liquids in which the concentration of oxygen in the vapor-gas phase is maintained below the lower flammability limit pertaining to said organic liquids.

With these and other objects in mind, the invention is hereinafter described in detail, the novel features thereof being particularly pointed out in the appended claims.

Summary of the Invention

In conformity with the present invention a process for the introduction of a gas into a body of liquid within a container vessel comprises:

(a) maintaining a major portion of said body of liquid in a recirculating flow condition, said major portion having no gas-liquid interface with an overhead gas space and being separated by mechanical means from, but in fluid communication with, a relatively quiescent portion of said liquid having a gas-liquid interface with the overhead gas phase; and

(b) introducing a feed gas stream directly into the major portion of liquid, the bubbles of said gas formed in said liquid thereby being maintained essentially in dispersed form in the recirculating liquid in said major portion of the body of liquid,

whereby the gas and liquid are advantageously mixed and recirculated without appreciable loss of said gas to the overhead gas phase.

An apparatus for carrying out this process comprises:

(a) a container vessel for said body of liquid;

(b) said container vessel means having a first section for receiving a first portion of said body of liquid and for enclosing an overhead gas space over the liquid received by said first container vessel section, and a second section for receiving a second portion of said body of liquid, said container vessel means being configured such that said second container vessel section is separated from said overhead gas space by the liquid in said first container vessel section;

(c) mechanical means for separating said first container vessel section from said second container vessel section while maintaining fluid communication between the liquid portion in said first container vessel section and the liquid portion in said second container vessel section; and

(d) conduit means for introducing a feed gas stream directly into the liquid portion in said second container vessel section

characterized by

(e) said second container vessel section being located below said first container section; and

(f) liquid recirculating means designed and disposed to establish a recirculating flow condition within the liquid in said second container vessel section whilst leaving the liquid in said first container vessel section in a relatively quiescent condition, and to provide for a recirculation flow path and flow velocity of the recirculating liquid portion such relative to said fluid communication between said recirculating and quiescent portions of the body of liquid; that the bubbles of gas formed upon introduction of the feed gas into the recirculating portion of the body of liquid are maintained in dispersed form in the recirculating liquid without any appreciable passage of the gas bubbles through said fluid communication.

In the process of the present invention a major portion of liquid, maintained in a recirculating flow condition, is separated from a relatively quiescent portion of said liquid by mechanical means, but with fluid communication therebetween. The quiescent portion of liquid has a gas-liquid interface with an overhead gas phase. A feed gas stream is introduced directly into the major portion of liquid. The bubbles of gas formed in the liquid are maintained essentially in dispersed form in the recirculating liquid in the major portion of said body of liquid. No appreciable loss of gas to the overhead gas phase occurs. In particular embodiments, various means can be employed to enhance the recirculating flow of liquid in said major portion of liquid, including the use of a hollow draft chamber, the retention of said quiescent portion of liquid is a separate surge vessel, and the use of a tube and shell reactor with an externally pumped recirculation stream maintaining the fluid communication with the quiescent portion of liquid in the surge vessel.

## Brief Description of the Drawings

The invention is further described herein with reference to the accompanying drawings in which:

Figure 1 is a schematic side elevational view of a container vessel representing an embodiment of the invention;

Figure 2 is a schematic side elevational view of a different container vessel configuration representing another embodiment of the invention, wherein a hollow draft chamber is employed;

Figure 3 is a schematic side elevational view of a container vessel-surge vessel configuration representing a further embodiment of the invention; and

Figure 4 is a schematic side elevational view of a variation of the configuration of Figure 3, wherein a shell and tube type vessel is employed as said container vessel.

## Detailed Description of the Invention

The objects of the invention are accomplished by introducing a feed gas directly into a major portion of a body of liquid separated mechanically from, but in fluid communication with, the remaining portion of said liquid maintained in a separate, relatively quiescent state. The quiescent portion of liquid has a gas-liquid interface, with an overhead gas phase. As will be appreciated from the description herein, the major portion of liquid has no such gas-liquid interface and overhead gas phase apart from that provided by said quiescent body of liquid. The major portion of liquid is maintained in a recirculating flow condition, facilitating the formation of gas bubbles upon said direct introduction of feed gas to said liquid. By various means, such gas bubbles are maintained essentially in dispersed form for gas dissolution in, and reaction with, the recirculating liquid in the container vessel. In the practice of the invention, the desired gas-liquid mixing operation is accomplished without appreciable loss of gas to the overhead gas phase.

As will be appreciated from the background discussion above, the invention is particularly advantageous with respect to applications in which an oxygen-containing feed gas is to be fed to a reactor system containing an organic liquid capable of burning, or even exploding, upon admixture of its vapor with an oxygen-rich gas. The invention enables the gas-liquid reaction to be carried out without the necessity for employing lower than the desired oxygen concentrations in order to prevent the oxygen in the gas phase for exceeding the lower flammability limit for the particular operation and system. It will be understood, however, that the invention can also be practiced advantageously with respect to hydrogen, chlorine and other gas-liquid reaction applications in which there is no such concern over the development of potentially explosive vapor-gas phase mixtures. As indicated above, there are instances in which it is desirable to carry out a particular reaction in a manner not sensitive to variations on the liquid level existing in the reactor vessel. For such applications, and in those in which it may otherwise be desirable to assure retention of the feed gas within the reactor vessel by virtue of the reactor design, apart from the maintenance of suitable vortex characteristics as in AGR processing, the subject invention provides a highly desirable process and system for carrying out desirable gas-liquid mixing operations.

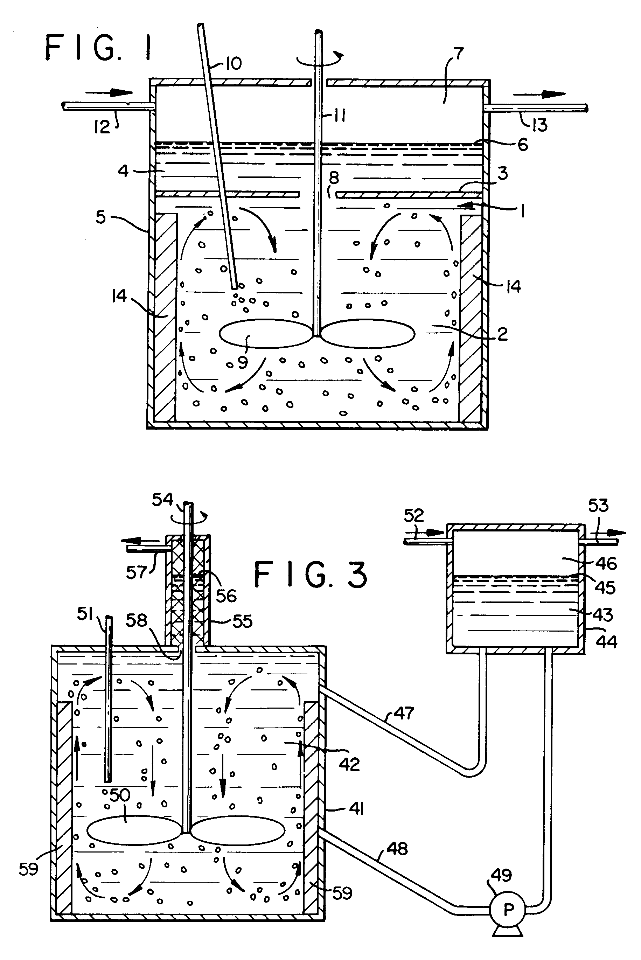

In one embodiment of the invention, as illustrated in Figure 1, the major portion of liquid is separated from said quiescent portion thereof by baffle means positioned within the body of reactive liquid. The body of liquid is represented in said Figure by the numeral 1 and has a major portion 2 separated by mechanical means, i.e. baffle means 3, but in fluid communication with a relatively quiescent portion 4 of said liquid in reactor vessel 5. Said quiescent portion 4 has a gas -liquid interface 6 with overhead phase 7. Baffle means 3 are illustrated for convenience as a substantially horizontal partition having opening 8 therein establishing said fluid communication between major portion 2 and quiescent portion 4 of liquid body 1. Said major portion 2 is maintained in a recirculating flow condition, in the illustrated embodiment, by down axial flow impeller 9 that produces the indicated vertical flow pattern. The feed gas stream is introduced through conduit means 10 directly into said major portion 2 of liquid such that the bubbles of gas formed in said liquid are maintained essentially in dispersed form in the recirculating liquid in said major portion of the body of liquid. It will be noted that, in the illustrated embodiment, drive shaft 11 of impeller means 9 extends upward through baffle opening 8 for connection with suitable driving means, not shown.

Baffle means 3 are desirably positioned, with respect to the recirculating stream of liquid and dispersed gas bubbles, so as to obviate the accumulation of individual gas bubbles under said baffle means 3 in excess of about 2 $cm^3$ in volume, preferably in excess of about 1 $cm^3$. By such means, essentially all of the injected gas and the liquid in maor portion 2 of liquid are advantageously involved in the desired gas-liquid mixing and recirculation operation. Baffle means 14 are desirably employed essentially along the walls of vessel 5 and below partition 3 to inhibit the general rotary motion of the gas-liquid phase, to assist in the pumping action of impeller 9, and to avoid the development of a gas-filled vortex above impeller 9 and below partition 3. In the practice of the invention, it is generally desirable to pass a small flow of inert gas through overhead gas phase 7 to purge feed gas, or any component thereof, from said overhead phase. For this purpose, inert gas introduction means 12 and inert gas withdrawal, or vent, means 13 are s hown in the drawing. When the feed gas comprises an oxygen containing gas, it will be understood that such flow of inert gas is conveniently employed to purge the oxygen content of the overhead gas phase to assure that it remains below the flammability limit thereof.

It will be appreciated that various changes and modifications can be made in the illustrated embodiment of Figure 1 without departing from the scope of the subject invention. Thus, an axial flow impeller designed to pump the liquid up the center of major portion of liquid 2, across baffle means 3 and down the region adjacent to the reactor vessel wall could also be conveniently employed. Depending on the reactor vessel size and diameter/height ratio, it may also be desirable to use more than one such axial flow impeller, or other suitable recirculation means, to produce the desired flow patterns and velocities for recirculation of gas bubbles within the reaction vessel. It may also be desirable, in some embodiments, to use a radial flow impeller to provide a region of high shear so as to reduce the size of the gas bubbles, thereby increasing the gas-liquid surface area. Another benefit of bas bubble size reduction, typically in the operating range of 0.1 to 10mm, is that the recirculating liquid velocity required to carry the bubbles down into the liquid region below baffle means 3 can be desirably reduced. It will also be appreciated that said baffle means 3, illustrated for convenience as a horizontal partition, can be of any other suitable configuration, and the opening or openings therein to establish fluid communication between major portion 2 and quiescent portion 4 of the body of liquid can be varied depending on the overall process and system being employed so long as the desired separation is maintained between said portions of liquid, but with fluid communication therebetween. It will also be appreciated that the opening or openings in said baffle means of the illustrated embodiment can be varied depending upon the requirements of a given application, but will generally comprise a small portion of the crosssectional area of reactor vessel 5 as compared with that in which the mechanical separation of liquid is maintained by baffle means 3. In this manner, the gas and liquid reactants can be mixed and recirculated without appreciable loss of gas to the overhead gas phase.

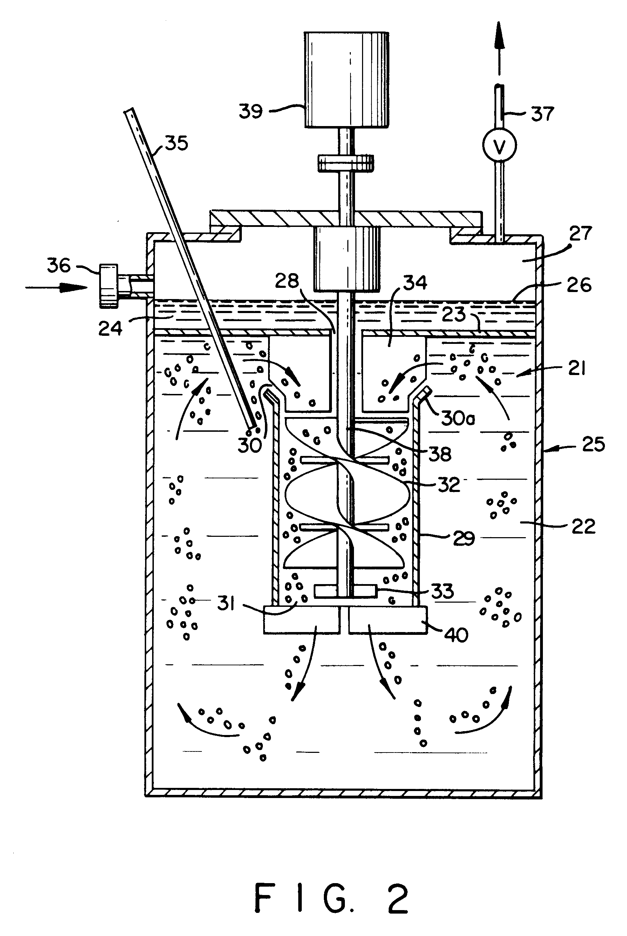

A desirable embodiment of the invention that facilitates the establishing of the desired recirculating flow condition in the major portion of the body of liquid is shown in Figure 2 of the drawings. In this embodiment, the major portion 22 of liquid body 21 is again separated by baffle means 23 from quiescent portion of liquid 24 in reactor vessel 25. Said quiescent portion 24 has a gas-liquid interface 26 with overhead gas phase 27. Opening 28 in said baffle means 23 establish fluid communication between major portion 22 and quiescent portion 24 of said liquid body 21. Major portion 22 is maintained in recirculating flow condition by the essentially central positioning within reactor vessel 25 of a hollow draft chamber 29 such that the open ends thereof, i.e. ends 30 and 31 are at the top and bottom thereof, respectively, and impeller means 32 are positioned within said hollow draft chamber 29. Such impeller means 32 are typically helical impeller means adapted to facilitate the downward flow of the gas bubble-liquid mixture in the draft chamber and upward flow outside said chamber. Impeller means 32 may, if desired, include radial flow impeller means 33 and lower baffle means 40, similar to the guide baffle means referred to below, to reduce the size of the gas bubbles that are maintained in the indicated recirculating flow condition as the gas bubble-liquid mixture in major portion 22 of liquid is caused to pass downward through hollow draft chamber 29 and up the outer sides of hollow draft chamber 29. The flow of said gas bubble-liquid mixture into the top end 30 and out of the bottom end 31 of said hollow draft chamber 29 is desirably facilitated by the directing of said mixture to top inlet end 30 by guide baffle means 34 positioned at the upper portion of said major portion 22 of liquid below baffle means 23. As in the Figure 1 embodiment, said baffle means 23 are desirably positioned so as to obviate the accumulation of individual gas bubbles thereunder in excess of about 2 cm$^3$ in volume.

The feed gas stream is injected directly into major portion 22 of liquid body 21 through conduit means 35 so that the bubbles of gas formed in the liquid are readily maintained essentially in dispersed form in the recirculating liquid in said major portion of the body of liquid. Gas inlet means 36 and outlet vent means 37 are provided to enable inert gas to be passed, if desired, through overhead gas phase 27 to assure that the concentration of oxygen or other inflammable gas is maintained below its flammability limit. Impeller means 32 include a suitable drive shaft 38 that extends upward through opening 28 in baffle means 23, as in the Figure 1 embodiment, for connection with suitable driving means generally represented by the numeral 39. It will be noted that hollow draft chamber 29, in particular applications, desirably includes a conically flared portion 30a at the upper end thereof, to further facilitate the flow of the gas bubble-liquid mixture into said draft chamber for downward passage therein.

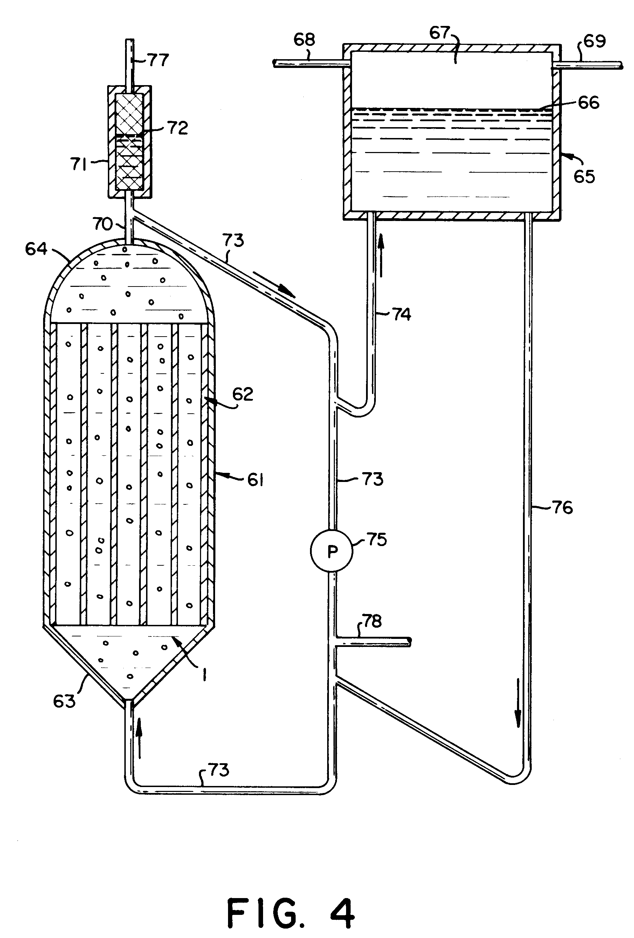

In the embodiment illustrated in Figure 3, the major portion of said body of liquid is separated from the quiescent portion thereof by the retention of the quiescent zone in a separate surge vessel fluidly connected to an essentially liquid filled container or reactor vessel. The surge vessel has therein the gas-liquid interface with an overhead gas phase as discussed above. The container vessel, represented in said Figure 3 by the numeral 41, contains the major portion 42 of liquid that is in fluid communication with the quiescent portion 43 of liquid maintained in surge vessel 44. Gas-liquid interface 45 separates said quiescent portion of liquid from overhead gas phase 46 in said surge vessel 44. The fluid connection between the vessels includes conduit means 47 in which the flow of the liquid from container vessel 41 is, in preferred applications of the invention, initially in a generally downward direction to facilitate gas-liquid separation, return of gas to said container vessel 41, and then upward flow of essentially gas-free liquid into said surge vessel 44. To preferably pass the liquid from the recirculation circuit back into container vessel 41 without passage of gas back to surge vessel 44, the recirculation circuit includes return conduit means 48 that passes downward from said surge vessel 44 and then generally upward to said container vessel 41. By such a combination of preferred flow paths in the recirculation circuit, the passage of gas bubbles to the surge vessel is desirably minimized. The flow of said liquid in the recirculation circuit is desirably facilitated by recirculation pump means, as by pump means 49 shown positioned in return conduit means 48.

In container vessel 41, impeller means 50, e.g. axial flow impeller means, are used to provide the indicated vertical recirculating flow pattern. The feed gas stream is introduced through conduit means 51 directly into said major portion of liquid 42, as in the other illustrative embodiments referred to above, such that the bubbles of gas formed in the liquid are maintained essentially in dispersed form in the recirculating liquid. As in the Figure 1 embodiment, baffle means 59 are desirably positioned at points essentially along the walls of container vessel 41 to inhibit any general rotary motion of the gas-liquid phase, to assist in the pumping action of impeller means 50, and to avoid the development of a gas-filled vortex above impeller means 50 in said container vessel 41. Inlet means 52 and outlet means 53 can be provided, if desired, to enable purge gas to be passed through overhead gas pha se 46 in surge vessel 44 to assure that the reactive gas content therein is maintained below its lower flammability limit.

Impeller means 50 include a drive shaft 54 for connection to suitable driving means, not shown. Drive shaft 54 will be seen to pass through the top of container vessel 41 and through a flame arrestor zone 55 positioned on the top of said container vessel 41. Said flame arrestor zone 55 is employed so as to have a free surface 56 of said body of liquid therein, with a suitable gas discharge conduit 57 above said surface. It will be understood that an annulus 58 will be positioned between the upwardly extending drive shaft 54 and the structure of container vessel 41. Any small amount of gas that escapes from said container vessel 41 through said annulus will, of necessity, pass through said flame arrestor zone 55 having said free surface of liquid and overhead gas therein. Gas escaping from container vessel 41 is conveniently released through discharge means 57 positioned above said free surface 56 of said flame arrestor. Suitable packing may also be employed in said zone. By such a flame arrestor means, the small amount of gas that escapes through the small annulus between the top of the container or reactor vessel and the impeller shaft is prevented from igniting in the proximity of the main body of the gas-liquid mixture that substantially fills said container vessel. Surge vessel 44 provides for the change in volume between the initial condition when no gas bubbles are in the container vessel and the condition that exists when the appropriate gas bubble concentration is developed for a desired reaction. The liquid level in surge vessel 44 can be used as a control on the addition of gas to the container vessel so as to maintain the desired concentration of gas bubbles in the liquid.

If desired to circulate liquid from surge vessel 44 back to container vessel 41 so as to allow it to be oxidized or otherwise treated, pump means 49 can be used as indicated above. Alternatively, the conduit for fluid flow in said recirculation circuit can be made of sufficient diameter and short length as to permit adequate transfer between said surge vessel and said container vessel by convection and diffusion.

In still another embodiment of the invention illustrated in Figure 4, the fluid circulation is implemented by means of an external pump instead of by impeller means positioned within the reactor, as in the previously illustrated systems. This embodiment is particularly suitable when a tube and shell reactor design is preferred for high heat-transfer requirements or when a catalyst to be utilized is conveniently packed into the tubes. The tube bundles 62 of tube and shell reactor 61 are adapted for the up-flow of the gas bubble-liquid mixture in the illustrated embodiment, but can be employed in either an up-flowing or down-flowing fashion. Feed mixture is passed to said tubes through lower plenum chamber 63, while upper plenum chamber 64 provides for the discharge of said mixture therefrom. The major portion of liquid in said reactor 61 is separated from the quiescent portion of liquid by the retention of said quiescent portion in separate surge vessel 65 in fluid communication with said reactor 61. Said surge vessel 65 has a gas-liquid interface 66 therein, with an overhead gas phase 67. The overhead gas phase can be purged to maintain the concentration of oxygen or other reactive gas below its lower flammability limit by the passage of a suitable inert gas to said overhead space through inlet conduit means 68, with discharge of gas therefrom through conduit means 69. Fluid communication of said surge vessel 65 with reactor 61 is maintained through fluid communication of said surge vessel 65 with the external recirculation circuit 73 embodiment as illustrated in Figure 4, the gas-bubble-liquid mixture is said external recirculation circuit is caused to flow from reactor 61 through line 70 for initial fluid communication with overhead flame arrestor zone 71, which has a free surface of liquid 72 therein. Fluid communication between the recirculation circuit and said surge vessel 65 is maintained by separate conduit means 74 adapted for passing a portion of the liquid from recirculation circuit 73 to said surge vessel upstream of said recirculation pump 75. Similarly, conduit 76 is adapted to pass said liquid from said surge vessel to said recirculation circuit 73 downstream of said recirculation pump 75. The flow of said liquid from recirculation circuit 73 into conduit 74 communicating with surge vessel 65 is preferably in a generally downward direction, and the flow of said liquid back into said recirculation circuit from conduit 76 is in a generally upward direction, thereby minimizing the passage of gas bubbles to said surge vessel 65.

In the practice of the Figure 4 embodiment, the use of flame arrestor zone 71, typically packed to provide flame arrestor characteristics, is a convenient gas vent feature adapted to safely discharge oxygen-rich gas or other reactive gas through vent 77 when the circulation of the gas bubble-liquid mixture is interrupted. The oxygen-rich or other desired feed gas is introduced into the system at any convenient location, as through line 78 that is positioned so as to assure that the gas bubbles are well dispersed in the liquid in recirculation circuit 73 before the gas bubble-liquid mixture enters plenum chamber 63. In the practice of the invention in this embodiment, as in others, the gas-liquid recirculation system is desirably configured to prevent accumulation of any large gas bubbles, e.g. in excess of 15mm in diameter, while maintaining an oxygen rich gas bubble concentration, for typical oxidation reaction applications, in the range of about 5 to 20 volume percent. If a down-flowing mode of application is utilized, the minimum flow velocity in said upper plenum chamber 64 and said lower plenum chamber 63, which then would feed and discharge tube bundle 62, has been found in general to be at least 0.3 m/s to insure that the gas bubbles are carried satisfactorily with the liquid into the tubes. It is also generally desirable that recirculation circuit 73 be sized so that the velocity therein is sufficiently high to keep the gas bubbles well dispersed. This desired velocity will vary depending on the physical properties of the fluid involved, but for water-oxygen mixtures, it should generally exceed about 3 m/s. Surge vessel 65 provides for volume expansion when the feed gas is passed into the recirculating liquid, and the volume of gas bubbles within the liquid may be conveniently controlled by observation of the liquid level 66 within said surge vessel 65.

It is generally desirable in applicable embodiments, as in those of Figures 1 and 2 of the drawings, to maintain the major portion of the body of liquid in a recirculating flow condition such as to preclude the existence of any significant passive regions of said major portion of liquid in which essentially no gas bubbles are dispersed in said liquid. It should be noted, however, that the container vessel may extend deeper than is shown in the Figure 1 and 2 embodiments, even though the lower regions in said vessel may contain passive liquid outside the recirculation flow condition created in the major portion of said body of liquid. Such embodiments are operable and are within the scope of the invention as herein disclosed and claimed, although not preferred because of the unused volume of liquid present in the container vessels thereof.

As an illustrative example of the benefits of the invention, 3 liters of 2-ethylhexaldehyde were placed in a 152 mm (6") diameter reactor of the type shown in Figure 2. The liquid level prior to the addition of oxygen to the system was about 2 cm above the horizontally positioned baffle means 23. Nitrogen was used as an inert gas to purge the reactor prior to the addition of said aldehyde. A slow nitrogen purge was maintained in overhead gas phase 27 to insure that the oxygen in said gas phase was maintained below 4% by volume. Provisions were made to feed oxygen gas as a stream of bubbles of less than about 6mm into the liquid phase below said baffle means 23 and at a location where these bubbles would be carried with the recirculating liquid phase in a well dispersed form. A coil in the reactor heated the initial charge to the desired reaction temperature and maintained said temperature during the reaction period. When the liquid reached the desired temperature, the 92.5 mm (3") diameter helical impeller was turned on at a rotational speed of 800 RPM, said speed being sufficient to insure that the liquid velocity down hollow draft chamber 29 was in excess of 0.3 m/s. The pure oxygen feed was initiated and controlled at a flow rate such that the level of the free liquid surface was maintained about 2 cm above the level existing prior to starting the oxygen flow. This level change corresponded to a change in the total volume below the horizontal baffle 23 of about ten volume percent due to the presence of the gas bubbles therein, said volume being a convenient and readily dispersed concentration of oxygen. As said oxygen was consumed, additional quantities thereof were introduced into the liquid phase in order to hold the liquid level at the desired point. By observing the quantity of oxygen consumed, the degree of reaction can be measured. From the known liquid properties of the mixture of starting materials and the liquid reaction products, changes in liquid volume can be accounted for, and the control point can be adjusted accordingly. Samples of the liquid phase below the baffle were periodically withdrawn for chemical analysis.

As the reaction proceeded, the oxygen uptake rate fell off, and the rate of oxygen feed was accordingly reduced to maintain the liquid level. Therefore, the oxygen bubble concentration in the liquid phase was maintained essentially constant. The overhead gas phase was continuously monitored to insure that its oxygen concentration did not approach its lower flammability limit. A nitrogen purge rate of about 0.15 l/min was sufficient to assure that the oxygen content of the gas phase was maintained below about 2%. Thus, the practical feasibility of carrying out a typical oxidation process with pure oxygen, or with a high oxygen content gas, in the gas bubbles employed in a gas bubble-liquid mixture, while maintaining the overhead gas phase well below the lower flammability limit of oxygen and the subject organic vapor, was demonstrated in this representative example.

It will be appreciated from the above that the oxygen-containing gas used in particular gas-liquid applications of the invention can be of any suitable oxygen concentration, even up to essentially pure oxygen. Furthermore, such applications can be carried out, in the practice of the invention, under efficient gas bubble formation, dispersion, dissolution and reaction conditions without exceeding the lower flammability limits of the free gas volume above the liquid. The invention also provides, in oxygen applications not involving the potential presence of flammable mixtures in the gas phase and in valuable hydrogenation, chlorination and other practical gas-liquid operations, a highly desirable alternative to various stirred reactor operations and even to the more efficient gas liquid mixing of AGR systems that are more process variable dependent than are the process and system herein described and claimed. The invention thus represents a highly desirable and practical advance in the field of gas-liquid mixing and reaction.

## Claims

1.  A process for the introduction of a gas into a body of liquid (1, 21) within a container vessel (5, 25, 41, 61) comprising:

(a) maintaining a major portion (2, 22, 42) of said body of liquid in a recirculating flow condition, said major portion having no gas-liquid interface with an overhead gas space (7, 27, 46, 67) and being separated by mechanical means (3, 23, 44, 65) from, but in fluid communication with, a relatively quiescent portion (4, 24, 43) of said liquid having a gas-liquid interface (6, 26, 45, 66) with the overhead gas phase (7, 27, 46, 67); and
(b) introducing a feed gas stream directly into the major portion of liquid, the bubbles of said gas formed in said liquid thereby being maintained essentially in dispersed form in the recirculating liquid in said major portion of the body of liquid,
whereby the gas and liquid are advantageously mixed and recirculated without appreciable loss of said gas to the overhead gas phase.

2. The process of Claim 1 in which said major portion of liquid (2, 22, 42) is maintained in said recirculation flow condition such as to preclude the existence of any significant passive regions of said major portion of liquid in which there are essentially no gas bubbles dispersed in said liquid.

3. The process of Claim 1 in which said mechanical means (3, 23) are positioned, relative to the recirculating flow path, so that the accumulation of individual gas bubbles in excess of above 2 cm$^3$ thereunder is avoided.

4. The process of Claim 1 in which said major portion (2) of liquid is maintained in a recirculating flow condition by an axial flow impeller (9, 32, 50) positioned therein.

5. The process of Claim 1 in which said major portion (22) of liquid is maintained in a recirculating flow condition by the essentially central positioning therein of a hollow draft chamber (29) such that the open ends (30, 31) of said chamber are at the top and bottom thereof and impeller means (32) positioned within said chamber is operated to cause the gas bubble-liquid mixture in said major portion (22) of liquid to pass through said hollow draft chamber (29).

6. The process of Claim 5 in which said impeller means (32) is operated to cause the flow of said gas bubble-liquid mixture downward in said draft chamber (29) and upward outside of said draft chamber.

7. The process of Claim 6 in which the flow of said gas bubble-liquid mixture into the top end (30) and out of the bottom end (31) of said draft chamber (29) is facilitated by the directing of said mixture to the upper inlet end of said draft chamber by guide baffle means (34).

8. The process of Claim 6 in which the size of the gas bubbles in said mixture is reduced by passing the recirculating gas bubble-liquid mixture through radial flow impeller means (33) and baffle means (40) positioned in the draft chamber (29) below said impeller means (32).

9. The process of Claim 5 in which said major portion (22) of liquid is separated from said quiescent portion (24) thereof by baffle means (23) positioned within said body of liquid (21), relative to the recirculating flow path, so as to obviate the accumulation of individual gas bubbles in excess of about 2 cm$^3$ thereunder.

10. The process of Claim 5 in which the flow of said gas bubble-liquid mixture into the top end (30) and out of the bottom end (31) of said draft chamber (29) is facilitated by the directing of said mixture to the upper inlet end of said draft chamber by guide baffle means (34) positioned in the upper portion of said major portion (22) of liquid below said baffle means (23), the size of gas bubbles in said mixture being reduced by passing the recirculating gas bubble-liquid mixture through radial flow impeller means (33) and baffle means (40) positioned in the draft chamber (29) below said axial impeller means (32).

11. The process of Claim 1 in which a major portion (42) of said liquid is separated from the quiescent portion (43) thereof by the retention of said quiescent zone in a separate surge vessel (44, 65) fluidly connected to said essentially liquid filled container vessel (41, 61), said surge vessel having therein said gas-liquid interface (45, 66) with an overhead gas phase (46, 67).

12. The process of Claim 11 in which fluid connection between said container vessel (41, 61) and said surge vessel (44, 65) is maintained through an external recirculation circuit (47, 48, 73, 74, 76), liquid flowing initially in a generally downward direction from said container vessel in said recirculation circuit for passage to said surge vessel, and liquid passing from said surge vessel in said recirculation circuit to said container vessel, with the flow of liquid from said recircualtion circuit into said container vessel being in a generally upward direction.

13. The process of Claim 12 in which liquid is pumped through said recirculation circuit (47, 48, 73, 74, 76).

14. The process of Claim 11 in which the major portion (42) of liquid is caused to fill said container vessel (41), said liquid being maintained in a recirculating flow condition by an axial flow impeller (50) positioned therein, any gas escaping through the annulus (58) between the container vessel (41) and the shaft (54) of said impeller being passed through a flame arrestor zone (55) having a free surface (56) of liquid therein, said gas being released through the discharge end of said flame arrestor zone.

15. The process of Claim 14 in which said impeller shaft (54) extends vertically upward from the container vessel (41), said gas escaping upward through the annulus (58) between the container vessel and the impeller shaft being contained by said flame arrestor zone (55) positioned above said container vessel.

16. The process of Claim 1 in which the major portion of liquid is caused to essentially fill said container vessel, comprising a tube and shell reactor vessel (61), said gas bubble-liquid mixture being maintained in a recirculating flow condition by the pumping of said mixture to and from said reactor vessel (61) in a recirculation circuit (73) external to said reactor vessel by recirculation pump means (75), the major portion of said liquid being separated from the quiescent portion thereof by the retention of said quiescent portion in a separate surge vessel (65) in fluid communication with said reactor vessel, said surge vessel having therein said gas-liquid interface (66) with an overhead gas phase (67).

17. The process of Claim 16 in which said fluid communication of the surge vessel (65) with said reactor vessel (61) is maintained through fluid communication of said surge vessel with the external recirculation circuit (73) of said reactor vessel.

18. The process of Claim 16 in which the gas bubble-liquid mixture is caused to flow from said reactor vessel (61) in said recirculation circuit (73) that is in fluid communication with a flame arrestor zone (71) having a free surface of liquid (72) therein, with fluid communication between said recirculation circuit and said surge vessel (65) being maintained by separate conduit means (74, 76) for passing a portion of said liquid from the recirculation circuit (73) upstream of said recirculation pump means (75) to said surge vessel (65) and for passing said liquid from said surge vessel (65) to said recirculation circuit (73) downstream of said recirculation pump means (75).

19. The process of Claim 18 in which the flow of said liquid from the recirculation circuit (73) into said conduit means (74) communicating with the surge vessel (65) is initially in a generally downward direction, and the flow of said liquid from the conduit, and the flow of said liquid from the conduit means into said recirculation circuit (73) is in a generally upward direction.

20. The process of Claim 18 and including venting gas from said flame arrestor zone (71) when the circulation of said gas bubble-liquid mixture is interrupted.

21. The process of any one of the preceding Claims in which said feed gas comprises an oxygen containing gas.

22. The process of any one of Claims 1 to 20 in which said feed gas comprises a hydrogen containing gas.

23. The process any one of Claims 1 to 20 in which said feed gas comprises a chlorine containing gas.

24. The process of any one of the preceding Claims and including passing an inert gas through said overhead gas phase (7, 27, 46, 67) to purge said feed gas, or any component thereof, from said overhead gas phase.

25. The process of Claim 24 in which said feed gas comprises an oxygen containing gas and said inert gas is used to purge the oxygen content of said overhead gas phase (7, 27, 46, 67) below the flammability limit thereof.

26. An apparatus for carrying out the method of any one of the preceding claims, comprising:
    (a) a container vessel (5; 25; 41, 44; 61, 65) for said body of liquid (1, 21);
    (b) said container vessel means having a first section (44, 65) for receiving a first portion (4, 24, 43) of said body of liquid and for enclosing an overhead gas space (7, 27, 46, 47) over the liquid received by said first container vessel section, and a second section (41, 61) for receiving a second portion (2, 22, 42) of said body of liquid (1, 21), said container vessel means being configured such that said second container vessel section (41, 61) is separated from said overhead gas space (7, 27, 46, 47) by the liquid in said first container vessel section (44, 65);

(c) mechanical means (3, 23; 41, 44, 47, 48; 61, 65, 73, 74, 76) for separating said first container vessel section (44, 65) from said second container vessel section (41, 61) while maintaining fluid communication (8; 28; 47, 48; 70, 73, 74, 76) between the liquid portion in said first container vessel section and the liquid portion in said second container vessel section; and

(d) conduit means (10, 35, 51, 78) for introducing a feed gas stream directly into the liquid portion in said second container vessel section (41, 61)

characterized by

(e) said second container vessel section (41, 61) being located below said first container section (44, 46); and

(f) liquid recirculating means (9, 32, 50, 75) designed and disposed to establish a recirculating flow condition within the liquid in said second container vessel section (41, 61) whilst leaving the liquid in said first container vessel section (44, 65) in a relatively quiescent condition, and to provide for a recirculation flow path and flow velocity of the recirculating liquid portion such, relative to said fluid communication (8; 28; 47; 70, 73, 74) between said recirculating and quiescent portions of the body of liquid, that the bubbles of gas formed upon introduction of the feed gas into the recirculating portion of the body of liquid are maintained in dispersed form in the recirculating liquid without any appreciable passage of the gas bubbles through said fluid communication (8; 28; 47; 70, 73, 74).

27. The apparatus of Claim 26 in which said mechanical means for separating said first and second container vessel sections (41, 61; 44, 65) comprises baffle means (3, 23) positioned within said container vessel means (5, 25).

28. The apparatus of Claim 26 in which said recirculating means comprises axial flow impeller means (9, 32, 50) positioned within said first container vessel section (41).

29. The apparatus of Claim 26 in which said recirculating means comprises a hollow draft chamber (29) positioned essentially centrally within said second container vessel section, said chamber having open ends (30, 31) at the top and bottom thereof as positioned within said first container vessel section, and impeller means (32) positioned within said chamber (29) and adapted to cause the passage of the gas bubble-liquid mixture in said recirculating liquid portion (22) to pass through said hollow draft chamber.

30. The apparatus of Claim 29 in which said impeller means comprises helical impeller means (32).

31. The apparatus of Claim 30 in which said impeller means (32) comprises a double helix configuration.

32. The apparatus of Claim 29 in which said impeller means (32) is designed to facilitate the flow of said gas bubble-liquid mixture downward in said draft chamber (29) and including guide baffle means (34) for directing said mixture to the top inlet end (30) of said draft chamber, said guide baffle means (34) being positioned in the upper portion of said second container vessel section below said mechanical means (23).

33. The apparatus of Claim 32 in which the hollow draft chamber (29) is conically flared at the upper end (30) thereof.

34. The apparatus of Claim 29 in which radial flow impeller means (33) and baffle means (40) are positioned in the draft chamber (29) below said impeller means (32).

35. The apparatus of Claim 26 wherein said first container vessel section comprises a separate surge vessel (44, 65) maintained in fluid communication with said second container vessel section (41, 61) by conduit means (47 48, 73, 74, 76), said surge vessel being adapted to contain a gas-liquid interface (45, 66) with an overhead gas space (46, 67) within said surge vessel.

36. The apparatus of Claim 35 in which said liquid recirculating means comprises axial flow impeller means (50) positioned within said second container vessel section (41), and including a packed flame arrestor zone (55) adapted to receive liquid from said second container vessel section and to maintain a free surface of liquid (56) therein, small amounts of gas passing through an annulus (58) between the second container vessel section (41) and a shaft (54) of said impeller means (50) passing into said liquid containing flame arrestor zone (55), and also including means (57) to vent gas above said free surface (56) from said flame arrestor zone.

37. The apparatus of Claim 35 in which the conduit means for maintaining fluid communication between said second container vessel section (41) and said surge vessel (44) comprises separate conduit means (47, 48) for the passage of the liquid from the second container vessel section to said surge vessel, and for the passage of said liquid back from the surge vessel to said second container vessel section.

38. The apparatus of Claim 37 in which said conduit means (47) from said second container vessel section (41) to said surge vessel (44) extends initially in a generally downward direction, and said conduit means (48) back to said second container vessel section extends in a generally upward direction into said second container vessel section, thereby minimizing the passage of gas bubbles to said surge vessel.

39. The apparatus of Claim 26 in which said second container vessel section comprises a tube and shell reactor vessel (61), and including an external recirculation circuit (73) for passing the gas bubble-liquid mixture to and from the reactor vessel, said first container vessel section comprising a separate surge vessel (65) in fluid communication with said reactor vessel, said surge vessel having therein said gas-liquid interface (66) with an overhead gas phase (67).

40. The apparatus of Claim 39 and including recirculation pump means (75) positioned in said recirculation circuit (73) to pump said mixture through said recirculation circuit (73).

41. The apparatus of Claim 39 and including conduit means (74, 76) to maintain fluid communication between said recirculation circuit (73) and said separate surge vessel (65).

42. The apparatus of Claim 39 in which said recirculation circuit (73) is in fluid communication with a flame arrestor zone (71), said flame arrestor zone including means (77) for venting gas therefrom.

43. The apparatus of Claim 41 in which said conduit means (74, 76) comprises separate conduit means for the passage of the liquid from said recirculation circuit (73) to said surge vessel (65), and for the passage of said liquid back from the surge vessel to said recirculation circuit.

44. The apparatus of Claim 43 in which the conduit means (74) from said recirculation circuit (73) to said surge vessel (65) extends initially in a generally downward direction, and said conduit means (76) back to said recirculation circuit from said surge vessel extends in a generally upward direction into said recirculation circuit, thereby minimizing the passage of gas bubbles to said surge vessel.

45. The apparatus of any one of Claims 26 to 44 and including purge means (12, 13, 36, 37, 52, 53, 68, 69) for passing an inert gas through said overhead gas space (7, 27, 46, 67).

**Patentansprüche**

1. Verfahren zum Einleiten eines Gases in eine Flüssigkeitsmasse (1, 21) innerhalb eines Aufnahmebehälters (5, 25, 41, 61), bei dem:

(a) ein größerer Teil (2, 22, 42) der Flüssigkeitsmasse in einem Umwälzströmungszustand gehalten wird, wobei dieser größere Teil keine Gas/Flüssigkeits-Grenzfläche mit einem Überkopf-Gasraum (7, 27, 46, 67) hat und von einem relativ ruhigen Teil (4, 24, 43) der Flüssigkeit, der mit der Überkopf-Gasphase (7, 27, 46, 67) eine Gas/Flüssigkeits-Grenzfläche (6, 26, 45, 66) hat, durch mechanische Mittel (3, 23, 44, 65) getrennt ist, mit diesem relativ ruhigen Teil aber in Strömungsverbindung steht; und

(b) ein Einsatzgasstrom unmittelbar in den größeren Teil der Flüssigkeit eingeleitet wird, wobei die in der Flüssigkeit dadurch gebildeten Gasblasen im wesentlichen in dispergierter Form in der umgewälzten Flüssigkeit in dem größeren Teil der Flüssigkeitsmasse gehalten werden,

wodurch das Gas und Flüssigkeit ohne nennenswerten Gasverlust an die Überkopf-Gasphase vorteilhaft gemischt und umgewälzt werden.

2. Verfahren nach Anspruch 1, bei dem der größere Teil der Flüssigkeit (2, 22, 42) in dem Umwälzströmungszustand gehalten wird, um das Auftreten von jeglichen nennenswerten passiven Bereichen in dem größeren Flüssigkeitsteil, in denen im wesentlichen keine Gasblasen in der Flüssigkeit dispergiert sind, auszuschließen.

3. Verfahren nach Anspruch 1, bei dem die mechanischen Mittel (3, 23) mit Bezug auf den Umwälzströmungsweg derart angeordnet sind, daß die Ansammlung von einzelnen Gasblasen von mehr als 2 cm$^3$ unter diesen mechanischen Mitteln vermieden wird.

4. Verfahren nach Anspruch 1, bei dem der größere Teil (2) der Flüssigkeit mittels eines in der Flüssigkeit angeordneten Axiallaufrades (9, 32, 50) in Umwälzströmungszustand gehalten wird.

5. Verfahren nach Anspruch 1, bei dem der größere Teil (22) der Flüssigkeit in einem Umwälzströmungszustand gehalten wird, in dem in diesen größeren Teil der Flüssigkeit eine hohle Strömungskammer (29) im wesentlichen mittig derart eingebracht wird, daß die offenen Enden (30, 31) der Kammer oben und unten liegen, und eine innerhalb der Kammer untergebrachte Laufradanordnung (32) betätigt wird, um das Gasblasen/Flüssigkeits-Gemisch in dem größeren Teil (22) der Flüssigkeit zum Durchtritt durch die hohle Strömungskammer (29) zu veranlassen.

6. Verfahren nach Anspruch 5, bei dem die Laufradanordnung (32) so betätigt wird, daß der Strom des Gasblasen/Flüssigkeits-Gemisches in der Strömungskammer (29) nach oben und außerhalb der Strömungskammer nach unten gerichtet ist.

7. Verfahren nach Anspruch 6, bei dem der Strom des Gasblasen/Flüssigkeits-Gemischs in das obere Ende (30) und aus dem unteren Ende (31) der Strömungskammer (29) begünstigt wird, indem das Gemisch dem oberen Einlaßende der Strömungskammer durch eine Führungswandanordnung (34) zugeleitet wird.

8. Verfahren nach Anspruch 6, bei dem die Größe der Gasblasen in dem Gemisch vermindert wird, indem das umgewälzte Gasblasen/Flüssigkeits-Gemisch durch eine Radial-Laufradanordnung (33) und eine Leitwandanordnung (40) hindurchgeleitet wird, die in der Strömungskammer (29) unterhalb der Laufradanordnung (32) sitzen.

9. Verfahren nach Anspruch 5, bei dem der größere Teil (22) der Flüssigkeit von dem ruhenden Teil (24) der Flüssigkeit durch eine Wandanordnung (23) getrennt wird, die in der Flüssigkeitsmasse (21) mit Bezug auf den Umwälzströmungsweg derart angeordnet ist, daß die Ansammlung von einzelnen Gasblasen von mehr als etwa 2 cm$^3$ unter der Wandanordnung vermieden wird.

10. Verfahren nach Anspruch 5, bei dem das Einströmen des Gasblasen/Flüssigkeits-Gemisches in das obere Ende (30) und aus dem unteren Ende (31) der Strömungskammer (29) begünstigt wird, indem das Gemisch dem oberen Einlaßende der Strömungskammer durch eine Führungswandanordnung (34) zugeleitet wird, die in dem oberen Teil des größeren Teils (22) der Flüssigkeit unter der Wandanordnung (23) sitzt, wobei die Größe der Gasblasen in dem Gemisch vermindert wird, indem das umgewälzte Gasblasen/Flüssigkeits-Gemisch durch eine Radiallaufradanordnung (33) und eine Leitwandanordnung (40) hindurchgeleitet wird, die in der Strömungskammer (29) unterhalb der Axiallaufradanordnung (32) sitzen.

11. Verfahren nach Anspruch 1, bei dem der größere Teil (42) der Flüssigkeit von dem ruhigen Teil (43) der Flüssigkeit getrennt wird, indem die ruhige Zone in einem gesonderten Auffanggefäß (44, 65) gehalten wird, das mit dem im wesentlichen flüssigkeitsgefüllten Aufnahmebehälter (41, 61) in Strömungsverbindung steht, wobei in dem Auffanggefäß eine Gas/Flüssigkeits-Grenzfläche (45, 66) mit einer Überkopf-Gasphase (46, 67) vorhanden ist.

12. Verfahren nach Anspruch 11, bei dem die Strömungsverbindung zwischen dem Aufnahmebehälter (41, 61) und dem Auffanggefäß (44, 65) über einen externen Umwälzkreis (47, 48, 73, 74, 76) aufrechterhalten wird, wobei Flüssigkeit anfänglich generell nach unten gerichtet von dem Aufnahmebehälter in dem Umwälzkreis zu dem Auffanggefäß strömt und Flüssigkeit von dem Auffanggefäß in dem Umwälzkreis zu dem Aufnahmebehälter gelangt, wobei der Flüssigkeitsstrom von dem Umwälzkreis in den Aufnahmebehälter generell aufwärts gerichtet ist.

13. Verfahren nach Anspruch 12, bei dem Flüssigkeit durch den Umwälzkreis (47, 48, 73, 74, 76) hindurchgepumpt wird.

14. Verfahren nach Anspruch 11, bei dem der größere Teil (42) der Flüssigkeit veranlaßt wird, den Aufnahmebehälter (41) zu füllen, wobei die Flüssigkeit mittels eines darin angeordneten Axiallaufrades (50) in einem Umwälzströmungszustand gehalten wird, wobei Gas, das durch den Ringraum (58) zwischen dem Aufnahmebehälter (41) und der Welle (54) des Laufrades entweicht, durch eine Flammensperrzone (55) hindurchgeleitet wird, in welcher eine freie Flüssigkeitsoberfläche (56) vorhanden ist, und wobei das Gas über das Auslaßende der Flammensperrzone freigesetzt wird.

15. Verfahren nach Anspruch 14, bei dem sich die Laufradwelle (54) von dem Aufnahmebehälter (41) lotrecht nach oben erstreckt, wobei das Gas, das nach oben durch den Ringraum (58) zwischen dem Aufnahmebehälter und der Laufradwelle entweicht, von der über dem Aufnahmebehälter angeordneten Flammensperrzone (55) aufgenommen wird.

16. Verfahren nach Anspruch 1, bei dem der größere Teil der Flüssigkeit veranlaßt wird, den ein Rohrbündelwärmetauscher-Reaktionsgefäß (61) bildenden Aufnahmebehälter im wesentlichen zu füllen, das Gasblasen/Flüssigkeits-Gemisch dadurch in einem Umwälzströmungszustand gehalten wird, daß das Gemisch in einem außerhalb des Reaktionsgefäßes liegenden Umwälzkreis (73) mittels einer Umwälzpumpanordnung (75) zu dem Reaktionsgefäß (61) hin und von diesem weg gepumpt wird, und der größere Teil der Flüssigkeit von dem ruhigen Teil der Flüssigkeit getrennt wird, indem der ruhige Teil in einem gesonderten Auffanggefäß (65) gehalten wird, das mit dem Reaktionsgefäß in Fluidverbindung steht, wobei in dem Auffanggefäß eine Gas/Flüssigkeits-Grenzfläche (66) mit einer Überkopf-Gasphase (67) vorliegt.

17. Verfahren nach Anspruch 16, bei dem die Fluidverbindung des Auffanggefäßes (65) mit dem Reaktionsgefäß (61) durch Fluidverbindung des Auffanggefäßes mit dem externen Umwälzkreis (73) des Reaktionsgefäßes aufrechterhalten wird.

18. Verfahren nach Anspruch 16, bei dem das Gasblasen/Flüssigkeits-Gemisch veranlaßt wird, von dem Reaktionsgefäß (61) in dem Umwälzkreis (73) abzuströmen, der mit einer Flammensperrzone (71) in Fluidverbindung steht, in der eine freie Flüssigkeitsoberfläche (72) vorliegt, wobei die Fluidverbindung zwischen dem Umwälzkreis und dem Auffanggefäß (65) mittels einer gesonderten Leitungsanordnung (74, 76) aufrechterhalten wird, die einen Teil der Flüssigkeit von dem Umwälzkreis (73) stromaufwärts von der Umwälzpumpanordnung (75) zu dem Auffanggefäß (65) gelangen läßt und die die Flüssigkeit von dem Auffanggefäß (65) zu dem Umwälzkreis (73) stromab von der Umwälzpumpanordnung (75) leitet.

19. Verfahren nach Anspruch 18, bei dem der Strom der Flüssigkeit von dem Umwälzkreis (73) in die mit dem Auffanggefäß (65) in Verbindung stehende Leitungsanordnung (74) anfänglich in generell nach unten gerichteter Richtung erfolgt, und bei dem der Strom der Flüssigkeit von der Leitung sowie der Strom der Flüssigkeit von der Leitungsanordnung in den Umwälzkreis (73) in generell nach oben gerichteter Richtung erfolgen.

20. Verfahren nach Anspruch 18, bei dem Gas von der Flammensperrzone (71) abgelassen wird, wenn die Umwälzung des Gasblasen/Flüssigkeits-Gemisches unterbrochen wird.

21. Verfahren nach einem der vorhergehenden Ansprüche, bei dem als Einsatzgas ein sauerstoffhaltiges Gas vorgesehen ist.

22. Verfahren nach einem der Ansprüche 1-20, bei dem als Einsatzgas ein wasserstoffhaltiges Gasvorgesehen ist.

23. Verfahren nach einem der Ansprüche 1 - 20, bei dem als Einsatzgas ein chlorhaltiges Gas vorgesehen ist.

24. Verfahren nach einem der vorhergehenden Ansprüche, bei dem ein inertes Gas durch die Überkopf-Gasphase (7, 27, 46, 67) hindurchgeleitet wird, um das Einsatzgas oder eine Komponente desselben aus der Überkopf-Gasphase herauszuspülen.

25. Verfahren nach Anspruch 24, bei dem als Einsatzgas ein sauerstoffhaltiges Gas vorgesehen ist und das inerte Gas benutztwird, um den Sauerstoffgehalt der Überkopf-Gasphase (7, 27, 46, 67) bis unter den Entflammbarkeits-Grenzwert desselben zu senken.

26. Vorrichtung zur Durchführung des Verfahrens nach einem der vorhergehenden Ansprüche mit:

(a) einem Aufnahmebehälter (5; 25; 41, 44; 61, 65) für die Flüssigkeitsmasse (1, 21);
(b) wobei die Aufnahmebehälteranordnung einen ersten Abschnitt (44, 65) zur Aufnahme eines ersten Teils (4, 24, 43) der Flüssigkeitsmasse und zum Umschließen eines Überkopf-Gasraums (7, 27, 46, 47) über der von dem ersten Aufnahmebehälterabschnitt aufgenommenen Flüssigkeit und einen zweiten Abschnitt (41, 61) zur Aufnahme eines zweiten Teils (2, 22, 42) der Flüssigkeitsmasse (1, 21) aufweist, und wobei die Aufnahmebehälteranordnung derart ausgebildet ist, daß der zweite Aufnahmebehälterabschnitt (41, 61) von dem Überkopf-Gasraum (7, 27, 46, 47) durch die Flüssigkeit in dem ersten Aufnahmebehälterabschnitt (44, 65) getrennt ist;

(c) einer mechanischen Anordnung (3, 23; 41, 44, 47, 48; 61, 65, 73, 74, 76) zum Trennen des ersten Aufnahmebehälterabschnitts (44, 65) von dem zweiten Aufnahmebehälterabschnitt (41, 61) unter Aufrechterhaltung von Fluidverbindung (8; 28; 47, 48; 70, 73, 74, 76) zwischen dem Flüssigkeitsteil in dem ersten Aufnahmebehälterabschnitt und dem Flüssigkeitsteil in dem zweiten Aufnahmebehälterabschnitt; und

(d) einer Leitungsanordnung (10, 35, 51, 78) zum unmittelbaren Einleiten eines Einsatzgasstroms in den Flüssigkeitsteils in dem zweiten Aufnahmebehälterabschnitt (41, 61), dadurch gekennzeichnet, daß

(e) der zweite Aufnahmebehälterabschnitt (41, 61) niedriger als der erste Behälterabschnitt (44, 65) angeordnet ist; und

(f) eine Flüssigkeitsumwälzanordnung (9, 32, 50, 75) vorgesehen ist, die derart ausgebildet und angeordnet ist, daß in der Flüssigkeit in dem zweiten Aufnahmebehälterabschnitt (41, 61) ein Umwälzströmungszustand ausgebildet wird, während die Flüssigkeit in dem ersten Aufnahmebehälterabschnitt (44, 65) in einem relativ ruhigen Zustand verbleibt, und daß für einen Umwälzströmungsweg und eine Strömungsgeschwindigkeit des umgewalzten Flüssigkeitsteils gegenüber der Fluidverbindung (8;28; 47;70, 73, 74) zwischen dem umgewälzten und dem ruhigen Teil der Flüssigkeitsmasse derart gesorgt wird, daß die beim Einleiten des Einsatzgases in den umgewälzten Teil der Flüssigkeitsmasse gebildeten Gasblasen in dispergierter Form in der umgewälzten Flüssigkeit gehalten werden, ohne daß es zu einem nennenswerten Übergang der Gasblasen durch die Fluidverbindung (8; 28; 47; 70, 73, 74) hindurch kommt.

27. Vorrichtung nach Anspruch 26, wobei die mechanische Anordnung zum Trennen des ersten und des zweiten Aufnahmebehälterabschnitts (41, 61; 44, 65) eine Leitwandanordnung (3, 23) aufweist, die innerhalb der Aufnahmebehälteranordnung (5, 25) angeordnet ist

28. Vorrichtung nach Anspruch 26, wobei die Umwälzanordnung eine Axiallaufradanordnung (9, 32, 50) aufweist, die innerhalb des ersten Aufnahmebehälterabschnitts (41) untergebracht ist.

29. Vorrichtung nach Anspruch 26, wobei die Umwälzanordnung eine hohle Strömungskammer (29) aufweist, die im wesentlichen mittig in dem zweiten Aufnahmebehälterabschnitt angeordnet ist, wobei die Kammer im Einbauzustand in dem ersten Aufnahmebehälterabschnitt oben und unten offene Enden (30, 31) aufweist, und wobei in der Kammer (29) eine Laufradanordnung (32) vorgesehen ist, mittels deren das Gasblasen/Flüssigkeits-Gemisch in dem umgewälzten Flüssigkeitsteil (22) veranlaßt werden kann, durch die hohle Strömungskammer hindurchzutreten.

30. Vorrichtung nach Anspruch 29, wobei die Laufradanordnung eine Schraubenlaufradanordnung (32) aufweist.

31. Vorrichtung nach Anspruch 30, wobei die Laufradanordnung (32) als Doppelwendel ausgebildet ist.

32. Vorrichtung nach Anspruch 29, wobei die Laufradanordnung (32) derart ausgebildet ist, daß sie den Strom des Gasblasen/Flüssigkeits-Gemisches in der Strömungskammer (29) nach unten erlaubt, und wobei eine Leitwandanordnung (34) vorgesehen ist, die das Gemisch zu dem oberen Einlaßende (30) der Strömungskammer leitet und die in dem oberen Teil des zweiten Aufnahmebehälterabschnitts unterhalb der mechanischen Anordnung (23) angeordnet ist.

33. Vorrichtung nach Anspruch 32, wobei sich die hohle Strömungskammer (29) an ihrem oberen Ende (30) konisch erweitert.

34. Vorrichtung nach Anspruch 29, wobei die Radiallaufradanordnung (33) und die Leitwandanordnung (40) in der Strömungskammer (29) unterhalb der Laufradanordnung (32) positioniert sind.

35. Vorrichtung nach Anspruch 26, wobei der erste Aufnahmebehälterabschnitt ein gesondertes Auffanggefäß (44, 65) aufweist, das mittels einer Leitungsanordnung (47, 48, 73, 74, 76) in Fluidverbindung mit dem zweiten Aufnahmebehälterabschnitt (41, 61) gehalten ist, und wobei das Auffanggefäß geeignet ist, eine Gas/Flüssigkeits-Grenzfläche (45, 66) mit einem innerhalb des Auffanggefäßes befindlichen Überkopf-Gasraum (46, 67) zu enthalten.

36. Vorrichtung nach Anspruch 35, wobei die Flüssigkeitsumwälzanordnung eine innerhalb des zweiten Aufnahmebehälterabschnitts (41) untergebrachte Axiallaufradanordnung (50) aufweist, wobei eine mit einer Füllung versehene Flammensperrzone (55) vorgesehen ist, die Flüssigkeit von dem zweiten Aufnahmebehälterabschnitt aufnehmen kann und in der eine freie Flüssigkeitsoberfläche (56) aufrechterhalten werden kann, wobei geringe Mengen an Gas, die durch einen Ringraum (58) zwischen dem zweiten Aufnahmebehälterabschnitt (41) und einer Welle (54) der Lauf radanordnung (50) hindurchtreten, in die Flüssigkeit enthaltende Flammensperrzone (55) gelangen, und wobei eine Anordnung (57) vorgesehen ist, um Gas oberhalb derfreien Oberfläche (56) aus der Flammensperrzone abzulassen.

37. Vorrichtung nach Anspruch 35, wobei die Leitungsanordnung zur Aufrechterhaltung der Fluidverbindung zwischen dem zweiten Aufnahmebehälterabschnitt (41) und dem Auffanggefäß (44) gesonderte Leitungsanordnungen (47, 48) für das Überleiten der Flüssigkeit von dem zweiten Aufnahmebehälterabschnitt zu dem Auffanggefäß und für das Zurückleiten der Flüssigkeit von dem Auffanggefäß zu dem zweiten Aufnahmebehälterabschnitt aufweist.

38. Vorrichtung nach Anspruch 37, wobei die von dem zweiten Aufnahmebehälterabschnitt (41) zu dem Auffanggefäß (44) führende Leitungsanordnung (47) sich anfänglich in generell nach unten gerichteter Richtung erstreckt, und wobei die zu dem zweiten Aufnahmebehälterabschnitt zurückführende Leitungsanordnung (48) sich in einer generell nach oben gerichteten Richtung in den zweiten Aufnahmebehälterabschnitt erstreckt, wodurch der Übertritt von Gasblasen zu dem Auffanggefäß minimiert wird.

39. Vorrichtung nach Anspruch 26, wobei der zweite Aufnahmebehälterabschnitt ein Rohrbündelwärmetauscher-Reaktionsgefäß (61) aufweist, wobei ein externer Umwälzkreis (73) vorgesehen ist, um das Gasblasen/Flüssigkeits-Gemisch zu dem Reaktionsgefäß hin und von diesem weg zu leiten, wobei der erste Aufnahmebehälterabschnitt ein gesondertes Auffanggefäß (65) aufweist, das mit dem Reaktionsgefäß in Fluidverbindung steht, und wobei sich in dem Auffanggefäß eine Gas/Flüssigkeits-Grenzfläche (66) mit einer Überkopf-Gasphase (67) befindet.

40. Vorrichtung nach Anspruch 39 mit einer Umwälzpumpanordnung (75), die in dem Umwälzkreis (73) angeordnet ist, um das Gemisch durch den Umwälzkreis (73) hindurchzupumpen.

41. Vorrichtung nach Anspruch 39 mit einer Leitungsanordnung (74, 76) zum Aufrechterhalten der Fluidverbindung zwischen dem Umwälzkreis (73) und dem gesonderten Auffanggefäß (65).

42. Vorrichtung nach Anspruch 39, bei welcher der Umwälzkreis (73) mit einer Flammensperrzone (71) in Fluidverbindung steht und die Flammensperrzone eine Anordnung (77) zum Abblasen von Gas aus der Flammensperrzone aufweist.

43. Vorrichtung nach Anspruch 41, wobei die Leitungsanordnung (74, 76) gesonderte Leitungsanordnungen für das Überleiten der Flüssigkeit von dem Umwälzkreis (73) zu dem Auffanggefäß (65) und für das Zurückleiten der Flüssigkeit von dem Auffanggefäß zu dem Umwälzkreis aufweist.

44. Vorrichtung nach Anspruch 43, wobei die von dem Umwälzkreis (73) zu dem Auffanggefäß (65) führende Leitungsanordnung (74) sich anfänglich generell in nach unten gerichteter Richtung erstreckt und wobei die von dem Auffanggefäß zurück zu dem Umwälzkreis führende Leitungsanordnung (76) sich in einer generell nach oben gerichteten Richtung in den Umwälzkreis hineinerstreckt, wodurch der Übertritt von Gasblasen in das Auffanggefäß minimiert wird.

45. Vorrichtung nach einem der Ansprüche 26 bis 44 mit einer Spülanordnung (12, 13, 36, 37, 52, 53, 68, 69) zum Hindurchleiten eines inerten Gases durch den Überkopf-Gasraum (7, 27, 46, 67).

## Revendications

1. Procédé d'introduction d'un gaz dans un volume de liquide (1, 21) dans un récipient (5, 25, 41, 61), consistant :

    (a) à maintenir une portion dominante (2, 22, 42) dudit volume de liquide à l'état de courant en recirculation, ladite portion dominante ne comprenant aucune interface gaz-liquide avec un espace supérieur de gaz (7, 27, 46, 67) et étant séparée par des moyens mécaniques (3, 23, 44, 65) d'une, mais en communication de fluide avec une, portion relativement au repos (4, 24, 43) dudit liquide ayant une interface gaz-liquide (6, 26, 45, 66) avec l'espace supérieur de gaz (7, 27, 46, 67) ; et

(b) à introduire un courant gazeux d'alimentation directement dans la portion dominante de liquide, les bulles dudit gaz formées dans ledit liquide étant ainsi maintenues essentiellement sous forme dispersée dans le liquide en recirculation dans ladite portion dominante du volume de liquide,

le gaz et le liquide étant ainsi soumis avantageusement à un mélange et une recirculation sans perte appréciable dudit gaz par passage dans la phase gazeuse supérieure.

2. Procédé suivant la revendication 1, dans lequel la portion dominante de liquide (2, 22, 42) est maintenue dans ledit état de courant en recirculation de manière à empêcher l'existence de n'importe quelles zones passives notables de ladite portion dominante de liquide dans lesquelles il n'existe pratiquement aucune bulle de gaz dispersée dans ledit liquide.

3. Procédé suivant la revendication 1, dans lequel les moyens mécaniques (3, 23) sont positionnés, par rapport au trajet du courant en recirculation, de manière à éviter une accumulation sous ces moyens mécaniques de bulles de gaz distinctes en un volume supérieur à 2 cm³.

4. Procédé suivant la revendication 1, dans lequel la portion dominante (2) de liquide est maintenue à l'état de courant en recirculation par un agitateur à ailettes à flux axial (9, 32, 50) qui y est positionné.

5. Procédé suivant la revendication 1, dans lequel la portion dominante (22) de liquide est maintenue à l'état de courant en recirculation par installation en position pratiquement centrale dans cette portion de liquide d'une chambre d'aspiration (29), de sorte que les extrémités ouvertes (30, 31) de ladite chambre soient à la partie supérieure et à la partie inférieure de cette portion de liquide et que le fonctionnement de l'agitateur à pales (32) positionné à l'intérieur de ladite chambre provoque le passage du mélange bulles de gaz-liquide présent dans ladite portion dominante (22) de liquide à travers ladite chambre d'aspiration (29).

6. Procédé suivant la revendication 5, dans lequel on fait fonctionner l'agitateur à ailettes (32) pour provoquer l'écoulement du mélange de bulles de gaz et de liquide vers le bas dans la chambre d'aspiration (29) et vers le haut à l'extérieur de ladite chambre d'aspiration.

7. Procédé suivant la revendication 6, dans lequel l'écoulement du mélange de bulles de gaz et de liquide dans l'extrémité supérieure (30) et hors de l'extrémité inférieure (31) de ladite chambre d'aspiration (29) est facilité en dirigeant ledit mélange à l'extrémité supérieure d'admission de ladite chambre d'aspiration par des chicanes de guidage (34).

8. Procédé suivant la revendication 6, dans lequel le diamètre des bulles de gaz dans le mélange est réduit par passage du mélange de bulles de gaz et de liquide en recirculation à travers un agitateur à ailettes à écoulement radial (33) et des chicanes (40) positionnés dans la chambre d'aspiration (29) au-dessous de l'agitateur à ailettes (32).

9. Procédé suivant la revendication 5, dans lequel la portion dominante (22) de liquide est séparée de la portion au repos (24) de ce liquide par des chicanes (23) positionnées à l'intérieur du volume de liquide (21), par rapport au trajet du courant en recirculation, de manière à empêcher l'accumulation de bulles de gaz distinctes en un volume supérieur à environ 2 cm³ au-dessous de ces chicanes.

10. Procédé suivant la revendication 5, dans lequel l'écoulement du mélange de bulles de gaz et de liquide dans l'extrémité supérieure (30) et hors de l'extrémité inférieure (31) de la chambre d'aspiration (29) est facilité en dirigeant ledit mélange à l'extrémité supérieure d'admission de ladite chambre d'aspiration par des chicanes de guidage (34) positionnées dans la partie supérieure de la portion dominante (22) de liquide au-dessous des chicanes (23), le diamètre des bulles de gaz dans ledit mélange étant réduit par passage du mélange de bulles de gaz et de liquide en recirculation à travers un agitateur à ailettes à écoulement radial (33) et des chicanes (40) positionnés dans la chambre d'aspiration (29) au-dessous de l'agitateur axial à ailettes (32).

11. Procédé suivant la revendication 1, dans lequel une portion dominante (42) du liquide est séparée de la portion au repos (43) de ce liquide par rétention de ladite zone au repos dans un réservoir-tampon distinct (44, 65) en communication de fluide avec le réservoir (41, 61) pratiquement rempli de liquide, ledit réservoir-tampon renfermant l'interface gaz-liquide (45, 66) avec une phase gazeuse supérieure (46, 67).

**12.** Procédé suivant la revendication 11, dans lequel la communication de fluide entre le réservoir (41, 61) et le réservoir-tampon (44, 65) est maintenue à travers un circuit extérieur de recirculation (47, 48, 73, 74, 76), le liquide s'écoulant initialement dans un sens généralement descendant dudit réservoir dans ledit circuit de recirculation pour le passage de ce liquide audit réservoir-tampon, et le liquide passant dudit réservoir-tampon dans ledit circuit de recirculation jusqu'audit réservoir, l'écoulement de liquide dudit circuit de recirculation dans ledit réservoir s'effectuant dans un sens généralement ascendant.

**13.** Procédé suivant la revendication 12, dans lequel le liquide est pompé à travers le circuit de recirculation (47, 48, 73, 74, 76).

**14.** Procédé suivant la revendication 11, dans lequel la portion dominante (42) de liquide est amenée à remplir le réservoir (41), ledit liquide étant maintenu à l'état de courant en recirculation par un agitateur à ailettes à écoulement axial (50) positionné dans ce liquide, toute quantité de gaz s'échappant à travers l'espace annulaire (58) entre le réservoir (41) et l'arbre (54) dudit agitateur à ailettes étant passée à travers une zone d'arrêt de flamme (55) renfermant une surface libre (56) de liquide, ledit gaz étant libéré par l'extrémité d'évacuation de ladite zone d'arrêt de flamme.

**15.** Procédé suivant la revendication 14, dans lequel l'arbre (54) de l'agitateur à ailettes s'étend verticalement de manière ascendante à partir du réservoir (41), le gaz s'échappant en montant à travers l'espace annulaire (58) entre le réservoir et l'arbre de l'agitateur à ailettes étant contenu par la zone d'arrêt de flamme (55) positionnée au-dessus dudit réservoir.

**16.** Procédé suivant la revendication 1, dans lequel la portion dominante de liquide est amenée à remplir pratiquement le réservoir, consistant en un réacteur à calandre (61), le mélange de bulles de gaz et de liquide étant maintenu à l'état de courant en recirculation par pompage dudit mélange jusqu'au, et hors du, réacteur (61) dans un circuit de recirculation (73) extérieur audit réacteur par une pompe de recirculation (75), la portion dominante dudit liquide étant séparée de la portion au repos de ce liquide par rétention de ladite portion au repos dans un réservoir-tampon (65) distinct en communication de fluide avec ledit réacteur, ledit réservoir-tampon renfermant l'interface gaz-liquide (66) avec une phase gazeuse supérieure (67).

**17.** Procédé suivant la revendication 16, dans lequel la communication de fluide entre le réservoir-tampon (65) et le réacteur (61) est maintenue par communication de fluide dudit réservoir-tampon avec le circuit extérieur de recirculation (73) dudit réacteur.

**18.** Procédé suivant la revendication 16, dans lequel le mélange de bulles de gaz et de liquide est amené à s'écouler du réacteur (61) dans le circuit de recirculation (73) qui est en communication de fluide avec une zone d'arrêt de flamme (71) renfermant une surface libre de liquide (72), la communication de fluide entre le circuit de recirculation et le réservoir-tampon (65) étant maintenue par des conduits distincts (74, 76) pour le passage d'une portion dudit liquide du circuit de recirculation (73) en amont de ladite pompe de recirculation (75) audit réservoir-tampon (65) et pour le passage dudit liquide dudit réservoir-tampon (65) audit circuit de recirculation (73) en aval de ladite pompe de recirculation (75).

**19.** Procédé suivant la revendication 18, dans lequel l'écoulement du liquide du circuit de recirculation (73) dans le conduit (74) communiquant avec le réservoir-tampon (65) s'effectue initialement dans un sens généralement descendant, et l'écoulement dudit liquide du conduit dans le circuit de recirculation (73) s'effectue dans un sens généralement ascendant.

**20.** Procédé suivant la revendication 18, consistant en outre à évacuer le gaz de la zone d'arrêt de flamme (71) lorsque la circulation du mélange de bulles de gaz et de liquide est interrompue.

**21.** Procédé suivant l'une quelconque des revendications précédentes, dans lequel le gaz d'alimentation consiste en un gaz contenant de l'oxygène.

**22.** Procédé suivant l'une quelconque des revendications 1 à 20, dans lequel le gaz d'alimentation consiste en un gaz contenant de l'hydrogène.

**23.** Procédé suivant l'une quelconque des revendications 1 à 20, dans lequel le gaz d'alimentation consiste en un gaz contenant du chlore.

**24.** Procédé suivant l'une quelconque des revendications précédentes, consistant en outre à faire passer un gaz inerte à travers la phase gazeuse supérieure (7, 27, 46, 67) pour chasser le gaz d'alimentation, ou n'importe lequel de ses constituants, de la phase gazeuse supérieure.

25. Procédé suivant la revendication 24, dans lequel le gaz d'alimentation consiste en un gaz contenant de l'oxygène et le gaz inerte est utilisé pour chasser l'oxygène présent dans la phase gazeuse supérieure (7, 27, 46, 67), à une teneur inférieure à la limite d'inflammabilité de ce gaz.

26. Appareil pour la mise en oeuvre du procédé suivant l'une quelconque des revendications précédentes, comprenant :

(a) un réservoir (5, 25, 41, 44, 61, 65) pour le volume de liquide (1, 21) ;

(b) ledit réservoir comprenant une première section (44, 65) destinée à recevoir une première portion (4, 24, 43) dudit volume de liquide et pour ménager un espace gazeux supérieur (7, 27, 46, 47) au-dessus du liquide que renferme ladite première section de réservoir, et une seconde section (41, 61) destinée à recevoir une seconde portion (2, 22, 42) dudit volume de liquide (1, 21), ledit réservoir présentant une configuration choisie, de sorte que ladite seconde section (41, 61) du réservoir soit séparée dudit espace gazeux supérieur (7, 27, 46, 47) par le liquide présent dans ladite première section (44, 65) du réservoir ;

(c) des moyens mécaniques (3, 23 ; 41, 44, 47, 48 ; 61, 65, 73, 74, 76) pour la séparation de ladite première section de réservoir (44, 65) de ladite seconde section de réservoir (41, 61), tout en maintenant une communication de fluide (8 ; 28 ; 47, 48 ; 70, 73, 74, 76) entre la portion liquide dans ladite première section de réservoir et la portion de liquide dans ladite seconde section de réservoir ; et

(d) des conduits (10, 35, 51, 78) pour l'introduction d'un courant gazeux d'alimentation directement dans la portion liquide présente dans ladite seconde section de réservoir (41, 61),

caractérisé en ce que

(e) ladite seconde section de réservoir (41, 61) étant située au-dessous de ladite première section de réservoir (44, 65) ; et

(f) des moyens de recirculation de liquide (9, 32, 50, 75) sont conçus et disposés de manière à établir un courant en recirculation à l'intérieur du liquide dans ladite seconde section de réservoir (41, 61), tout en laissant le liquide présent dans ladite première section de réservoir (44, 65) dans un état de repos relatif, et de manière à établir un trajet de courant en recirculation et une vitesse d'écoulement de la portion de liquide en recirculation choisis, de sorte que, par rapport à la communication de fluide (8 ; 28 ; 47 ; 70, 73, 74) entre la portion en recirculation et la portion au repos du volume de liquide, les bulles de gaz formées lors de l'introduction du gaz d'alimentation dans la portion en recirculation du volume de liquide soient maintenues à l'état dispersé dans le liquide en recirculation sans aucun passage appréciable des bulles de gaz à travers ladite communication de fluide (8 ; 28 ; 47 ; 70, 73, 74).

27. Appareil suivant la revendication 26, dans lequel les moyens mécaniques pour la séparation des première et seconde sections de réservoir (41, 61 ; 44, 65) comprennent des chicanes (3, 23) positionnées à l'intérieur du réservoir (5, 25).

28. Appareil suivant la revendication 26, dans lequel les moyens de recirculation comprennent un agitateur à ailettes à courant axial (9, 32, 50) positionné à l'intérieur de la première section de réservoir (41).

29. Appareil suivant la revendication 26, dans lequel les moyens de recirculation comprennent une chambre d'aspiration (29) en position pratiquement centrale à l'intérieur de la seconde section de réservoir, ladite chambre ayant des extrémités ouvertes (30, 31) à sa partie supérieure et à sa partie inférieure telle qu'elle est positionnée à l'intérieur de ladite première section de réservoir, et un agitateur à ailettes (32) positionné à l'intérieur de ladite chambre (29) et apte à provoquer le passage du mélange de bulles de gaz et de liquide dans ladite portion de liquide en recirculation (22) pour son passage à travers ladite chambre creuse d'aspiration.

30. Appareil suivant la revendication 29, dans lequel l'agitateur à ailettes consiste en un agitateur hélicoïdal (32).

31. Appareil suivant la revendication 30, dans lequel l'agitateur à ailettes (32) consiste en un agitateur ayant une configuration en double hélice.

32. Appareil suivant la revendication 29, dans lequel l'agitateur à ailettes (32) est conçu de manière à faciliter l'écoulement du mélange de bulles de gaz et de liquide vers le bas dans la chambre d'aspiration (29) et comprend des chicanes de guidage (34) pour diriger ledit mélange à l'orifice supérieur d'admission (30) de ladite chambre d'aspiration, lesdites chicanes de guidage (34) étant positionnées dans la portion supérieure de la seconde section de réservoir au-dessous des moyens mécaniques (23).

33. Appareil suivant la revendication 32, dans lequel la chambre creuse d'aspiration (29) est évasée en cône à son extrémité supérieure (30).

34. Appareil suivant la revendication 29, dans lequel l'agitateur à ailettes à écoulement radial (33) et les chicanes (40) sont positionnés dans la chambre d'aspiration (29) au-dessous de l'agitateur à ailettes (32).

35. Appareil suivant la revendication 26, dans lequel la première section de réservoir comprend un réservoir-tampon (44, 65) distinct maintenu en communication de fluide avec la seconde section de réservoir (41, 61) par des conduits (47, 48, 73, 74, 76), ledit réservoir-tampon étant apte à renfermer une interface gaz-liquide (45, 66) avec un espace gazeux supérieur (46, 67) à l'intérieur dudit réservoir-tampon.

36. Appareil suivant la revendication 35, dans lequel les moyens de recirculation de liquide comprennent un agitateur à ailettes à courant axial (50) positionné à l'intérieur de la seconde section de réservoir (41), et comprennent une zone garnie d'arrêt de flamme (55) apte à recevoir le liquide provenant de ladite seconde section de réservoir et à maintenir une surface libre de liquide (56) dans cette zone, de petites quantités de gaz passant à travers un espace annulaire (58) entre la seconde section de réservoir (41) et un arbre (54) dudit agitateur à ailettes (50) passant dans ladite zone d'arrêt de flamme (55) contenant du liquide, et comprennent également des moyens (57) pour évacuer le gaz au-dessus de ladite surface libre (56) de ladite zone d'arrêt de flamme.

37. Appareil suivant la revendication 35, dans lequel les conduits pour le maintien de la communication de fluide entre la seconde section de réservoir (41) et le réservoir-tampon (44) comprennent des conduits distincts (47, 48) pour le passage du liquide de la seconde section de réservoir audit réservoir-tampon, et pour le retour dudit liquide du réservoir-tampon à ladite seconde section de réservoir.

38. Appareil suivant la revendication 37, dans lequel le conduit (47) allant de la seconde section de réservoir (41) au réservoir-tampon (44) s'étend initialement dans un sens généralement descendant, et le conduit (48) revenant à ladite seconde section de réservoir s'étend dans un sens généralement ascendant dans ladite seconde section de réservoir, ce qui permet de réduire au minimum le passage de bulles de gaz jusqu'au réservoir-tampon.

39. Appareil suivant la revendication 26, dans lequel la seconde section de réservoir comprend un réacteur tubulaire (61) et comprend un circuit extérieur de recirculation (73) pour le passage du mélange de bulles de gaz et de liquide au réacteur et hors de ce réacteur, la première section de réservoir comprenant un réservoir-tampon (65) distinct en communication de fluide avec ledit réacteur, ledit réservoir-tampon renfermant l'interface gaz-liquide (66) avec une phase gazeuse supérieure (67).

40. Appareil suivant la revendication 39, comprenant en outre une pompe de recirculation (75) positionnée dans le circuit de recirculation (73) pour le pompage du mélange à travers ledit circuit de recirculation (73).

41. Appareil suivant la revendication 39, comprenant en outre des conduits (74, 76) pour maintenir la communication de fluide entre le circuit de recirculation (73) et le réservoir-tampon (65) distinct.

42. Appareil suivant la revendication 39, dans lequel le circuit de recirculation (73) est en communication de fluide avec une zone d'arrêt de flamme (71), ladite zone d'arrêt de flamme comprenant des moyens (67) pour en évacuer le gaz.

43. Appareil suivant la revendication 41, dans lequel les conduits (74, 76) comprennent des conduits distincts pour le passage du liquide hors du circuit de recirculation (73) jusqu'au réservoir-tampon (65), et pour le retour dudit liquide du réservoir-tampon audit circuit de recirculation.

44. Appareil suivant la revendication 43, dans lequel le conduit (74) allant du circuit de recirculation (73) au réservoir-tampon (65) s'étend initialement dans un sens généralement descendant, et le conduit (76) revenant dudit réservoir-tampon audit circuit de recirculation s'étend dans un sens généralement ascendant dans ledit circuit de recirculation, ce qui permet de réduire au minimum le passage de bulles de gaz jusqu'audit réservoir-tampon.

45. Appareil suivant l'une quelconque des revendications 26 à 44, comprenant en outre des moyens de purge (12, 13, 36, 37, 52, 53, 68, 69) pour le passage d'un gaz inerte à travers l'espace gazeux supérieur (7, 27, 46, 67).

FIG. 1

FIG. 3

F I G. 2

# FIG. 4